# EUROPÄISCHE PATENTSCHRIFT

(11) **EP 0 522 378 B1**
(45) Veröffentlichungstag und Bekanntmachung des Hinweises auf die Patenterteilung: **23.08.1995**
(21) Anmeldenummer: 92110879.1
(22) Anmeldetag: 26.06.1992
(51) Int. Cl.: B01D 29/35

(54) **Drucksortierer**
Pressure sorter
Cribleur à pression

(30) Priorität: 12.07.1991 DE 4123112
(43) Veröffentlichungstag der Anmeldung: 13.01.1993
(73) Patentinhaber: J.M. Voith GmbH, D-89522 Heidenheim (DE)
(72) Erfinder: Rienecker, Reimund, W-7920 Heidenheim (DE); Schweiss, Peter, W-7915 Elchingen (DE); Bähr, Theodor, W-7920 Heidenheim (DE)
(74) Vertreter: Weitzel, Wolfgang, Dr.-Ing.

(56) Entgegenhaltungen:
- EP-A- 0 267 327
- DE-A- 1 561 654
- DE-A- 2 140 904
- DE-A- 3 023 902

## Beschreibung

Die Erfindung betrifft einen Drucksortierer entsprechend dem Oberbegriff des Patentanspruchs 1. Ein solcher Drucksortierer ist bekannt aus der DE-A-30 23 902. Bei diesem Drucksortierer ist der Siebkorb und der darin befindliche Rotor in gleicher Weise und gleichsinnig gegenüber der zentralen Mittelachse des Gehäuses versetzt, wodurch ein sichelförmiger Gutstoffraum entsteht. Es ist damit beabsichtigt, wegen der dadurch größeren Querschnitte desselben die damit verbundene Verzögerung der Ausströmgeschwindigkeit die im Bereich der Auslaßöffnung entstehenden, von den Sortierelementen des Rotors hervorgerufenen Pulsationen in der Suspensionsströmung weiter herabzusetzen.

Die Aufgabe der Erfindung ist es, die oft zunächst nur partielle Verstopfungsgefahr des Siebes solcher Drucksortierer herabzusetzen. Es besteht nämlich die Neigung, daß bei großen Durchströmgeschwindigkeiten der Suspensionsteilchen durch die Siebkorböffnungen diese durch Anlagern oder Anspinnen von länglichen Bestandteilen der Suspension verstopfen. Es ist erkannt worden, daß die Durchströmgeschwindigkeit durch den Siebkorb höchstens etwa 2,5 m/s betragen darf, um die Gefahr von Anspinnungen und Verstopfungen der Siebperforation (Durchlaßlöcher bzw. -schlitze) sehr klein zu halten.

Die genannte Aufgabe wird durch die Merkmale des kennzeichnenden Teils des Patentanspruchs 1 gelöst.

Weiterhim ist aus der DE-A-2 140 904 bekannt, zwischen dem ringförmigen Einlaßbereich für die zu filtrienende Suspension und dem ringförmigen Gutstoffbereich des Drucksortierers eine nach obenhim sich verjüngende, Kegelstumpfförmige Trennwand vorzusehen. Der seibkorb ist bei diesem Dokument zentrisch im Gehäuse angeordnet.

Nachfolgend wird die Erfindung anhand der in den Figuren dargestellen Ausführungsbeispiele erläutert, wobei
- Figur 1: einen Querschnitt durch ein Tandemgehäuse mit zwei Gehäuseteilen und jedem Gehäuseteil zugeordnetem Siebkorb und Rotor;
- Figur 2: einen Axialschnitt entsprechend Fig. 1 und
- Figur 3: einen Querschnitt entsprechend Fig. 1 bei einem normalen Gehäuse mit je einem zugeordneten Rotor und Siebkorb
zeigen.

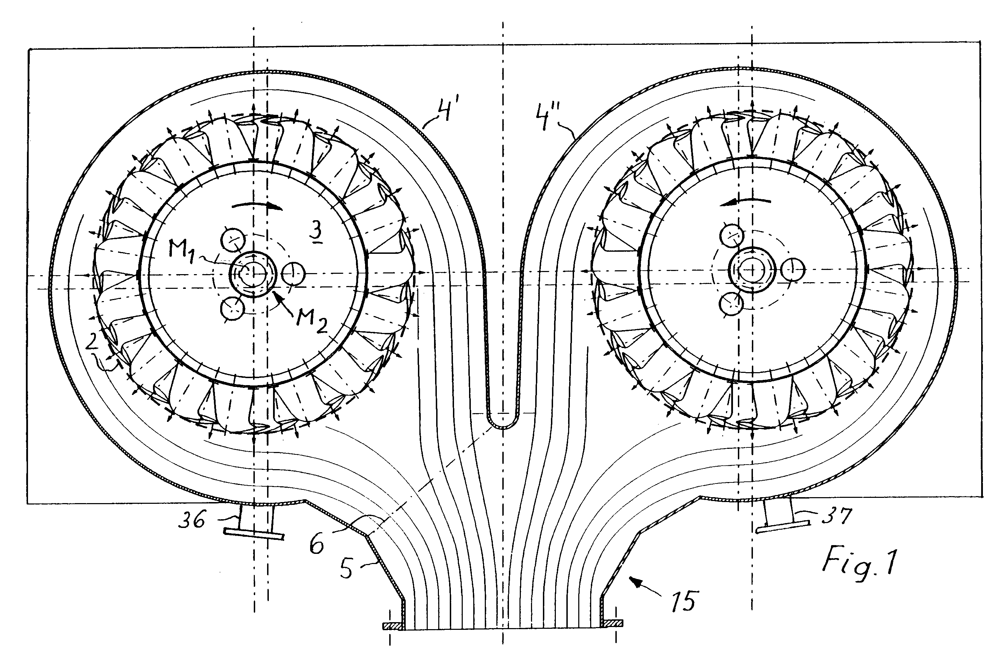

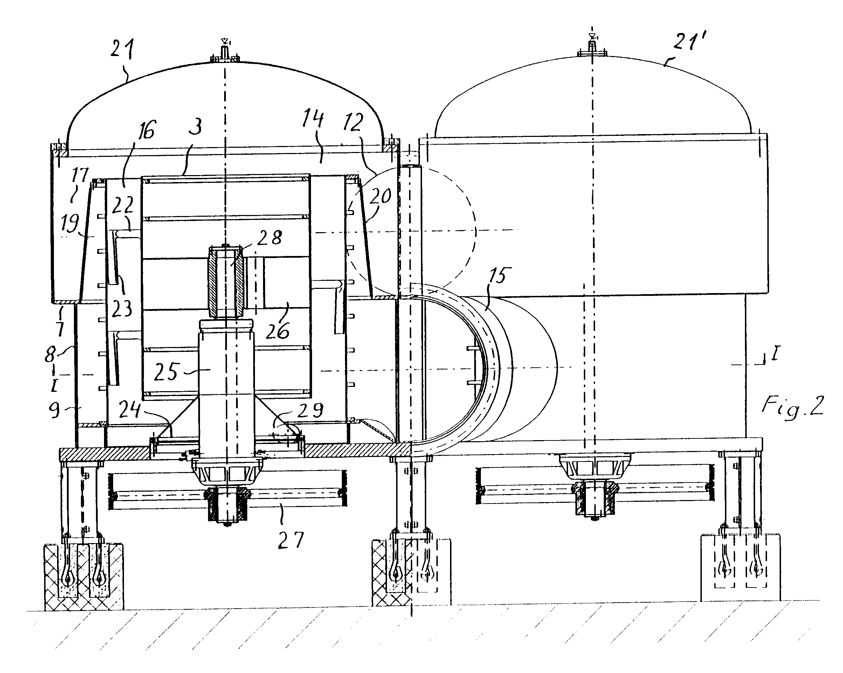

Die beiden Gehäuseteile 4' und 4'' der Figur 1 und 2 haben gemeinsam sowohl die (obere) Einlaßöffnung 12 als auch die (untere) Auslaßöffnung 15. Jedes Gehäuseteil hat zentral einen Siebkorb 2 und zentrisch und zentral dazu angeordneten Rotor 3. Jeder Rotor trägt an im wesentlichen senkrecht zur Rotorachse sich erstreckenden Armen 22 Sortierelemente 23, die einen relativ geringen Abstand von dem Siebkorb haben. Deren Querschnitt im wesentlichen senkrecht zur Siebkorb- oder Rotorachse kann hydrofoilförmig, also tragflügelförmig ausgebildet sein.

Es befindet sich zwischen dem Rotor 3 und dem Siebkorb 2 jeweils ein Stoffsortierraum 16, sozusagen auf der Einströmseite, wozu hier auch ein oberer Zuströmraum 14 und ein Einlaßraum 17, an den die Einlaßöffnung 12 anschließt, gehören. Zwischen dem Siebkorb und der Wandung der Gehäuseteile (unteres Gehäuseteil 8 und oberes Gehäuseteil 7) befindet sich jeweils der Gutstoffraum 9 bzw. 19. Dies ist bei einer Fasersortierung also der Raum, in dem sich der Gutanteil, also der den Hauptbestandteil der guten Fasern enthaltende Anteil der Suspension ansammelt. Der Auslaß aus dem Siebsortierraum 16 ist hier mit 29 strichpunktiert nur angedeutet.

Der Rotor wird getragen von einer Welle über Arme 26, wobei sich die Lager der Welle 28 in einem Lagergehäuse 25 befinden, das von einer Grundplatte 24 getragen ist. Der Antrieb der Rotorwelle 28 erfolgt hier jeweils über eine Riemenscheibe 27. Auch ein Zahnradgetriebe ist möglich.

Man erkennt nun, daß jeweils die zentrale Mittelachse M₂ jedes Gehäuseteils in bezug auf die zugehörige zentrale Mittelachse M₁ von Siebkorb bzw. Rotor entlang einer Ebene, die durch die zentrale Mittelachse von Siebkorb bzw. Rotor geht und im wesentlichen senkrecht auf dem engsten Querschnitt 6 der Auslaßöffnung 15 steht, in Richtung der Auslaßströmung versetzt ist. Dieser Versatz beträgt etwa 6 bis 12 % vom Siebkorbdurchmesser. Die Richtung des Versatzes von Gehäuse- und Siebkorbmittelachse kann auch bis zu 15° von der genannten Ebene abweichen.

In diesem Falle ist der Auslaßkanal zunächst zweiteilig, wobei durch ein Übergangsstück 5 die einheitliche Auslaßöffnung 15 hergestellt wird. Dieser Versatz gilt bei der dargestellten Ausführungsform mit zwei Gehäuseteilen nur für jeweils den unteren Gehäusebereich 8 jedes Gehäuseteils. Der obere Gehäuseteil 7 ist jeweils genau zentrisch zum Rotorsiebkorb. Hier ist jedoch eine kegelstumpfförmige Trennwand 20 vorgesehen, die den Gutstoffraum 19 vom Einlaßraum 17 trennt. Hierdurch wird die Strömungsgeschwindigkeit in Richtung auf die Auslaßquerschnitte der Gehäuseteile ohnehin so verringert, daß die Strömungsgeschwindigkeit höchstens 2,5 m/s erreicht.

Im Gutstoffraum wird mit der Strömungsgeschwindigkeit auch der Abfall des statischen Drucks gering gehalten. Somit wird auch erreicht, daß eine maximale Abweichung der Durchströmgeschwindigkeit durch die Siebkorböffnungen von einem mittleren Wert (z.B. 1,5 m/s, rein rechnerisch auf die Siebloch-Durchgangsgesamtfläche bezogenen, arithmetrischen Mittelwert) nach oben hin höchstens 25 % beträgt.

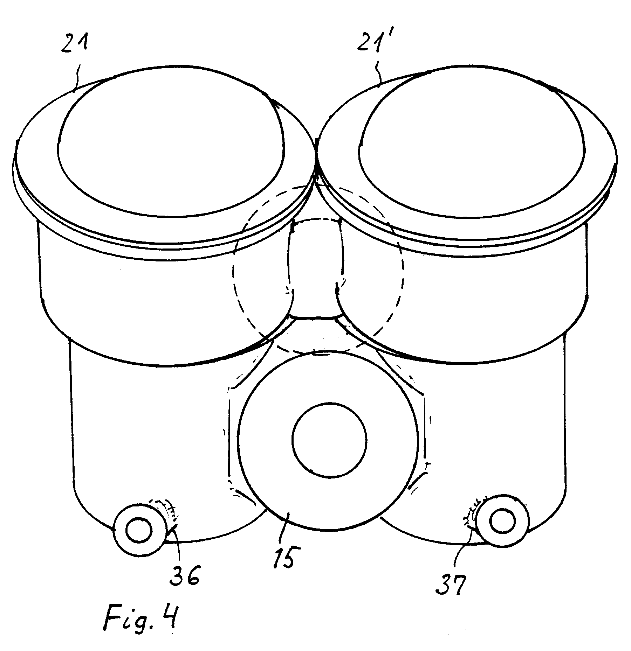

Es sind, wie in Figur 4 zu erkennen, im Schnitt quer zur Mittelachse der bei Tandemanordnung sich entsprechenden Gehäuseteile 4', 4'' der Ausströmkanal für Gutstoff und die Ausströmkanäle 36, 37 für den Durchlauf spiegelsymmetrisch angeordnet. Man kann natürlich auch einen mittig angeordneten Auslaß für den Durchlauf vorsehen.

In Figur 2 und 4 sind noch die Deckel 21 und 21' der Gehäuse angegeben.

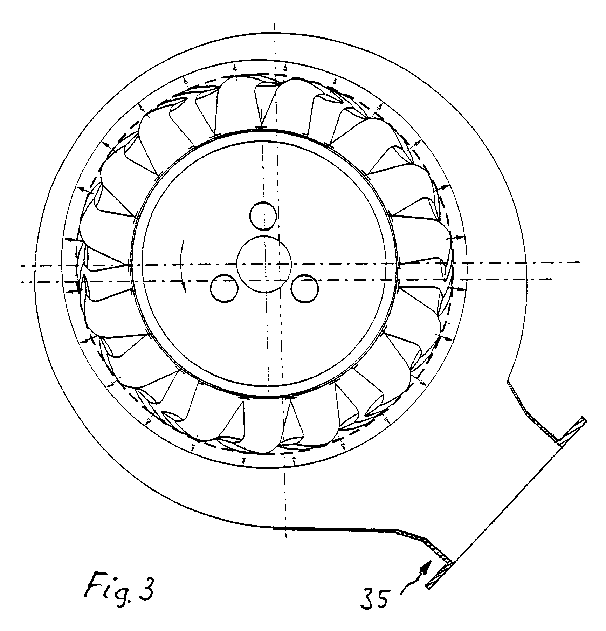

Der Drucksortierer nach Fig. 3 ist ähnlich aufgebaut wie jedes Sortiererteil nach Fig. 1 bzw. 2. Hier ist jedoch ein üblicher Sortierer mit einem Gehäuse und mit je einem Rotor und Siebkorb dargestellt, wobei hier die Auslaßöffnung 35 des Gehäuses die einzige für den Gutstoff ist. Es gibt ebenfalls eine einzige Einlaßöffnung und Auslaßöffnung für den Siebsortierraum, was hier jedoch in diesem Schnitt nicht zu erkennen ist.

## Patentansprüche

1. Drucksortierer
- mit einem Gehäuse (4', 4''), das kreiszylindrisch oder in Schnitten senkrecht zur zentralen Mittelachse desselben kreisrund ist;
- das Gehäuse (4', 4'') umfaßt:
- mindestens je eine Einlaß - (12), Durchlauf-Auflaß-(36, 37) und Gutstoff-Auslaßöffnung (15), wobei zwischen Einlaß- und Auslaßöffnungen ein gewisser Druckabfall herstellbar ist;
- einen rotationssymmetrischen Siebkorb (2) mit zentrisch innerhalb dessen angeordnetem Rotor (3);
- einen zwischen Siebkorb und Rotor befindlichen Stoffsortierraum (16);
- einen radial außerhalb des Siebkorbes (2) zwischen diesem und dem Gehäuse (4', 4'') befindlichen Gutstoffraum (9, 19);
- die zentrale Mittelachse (M₂) des Gehäuses (4', 4'') ist entlang einer auf der oder dem engsten Querschnitt (6) der Auslaßöffnung (15) des Gehäuses für Gutstoff senkrecht stehenden oder von einer solchen Ebene höchstens 15° abweichenden, jeweils die zentrale Siebkorbmittelachse (M₁) enthaltenden Ebene in Ausströmrichtung in bezug auf die zentrale Mittelachse des Korbes (M₁) um 6 bis 12 % des inneren Siebkorbdurchmessers versetzt;
gekennzeichnet durch die folgenden Merkmale:
- nur das Gehäuseunterteil (8) ist im Bereich der Ausströmöffnung (15) aus dem Gehäuse entsprechend versetzt, wobei sich in diesem Bereich im wesentlichen die eine Hälfte des Siebkorbes (2) befindet;
- das Gehäuseoberteil (7) ist zentrisch zur zentralen Mittelachse (M₁) des Siebkorbes angeordnet;
- das Gehäuseoberteil (7) weist eine in Richtung weg von dem Gehäuseunterteil (8) sich verjüngende kegelstumpfförmige Trennwand (20) auf, die den Einlaßbereich (17) von dem Gutstoffbereich (19) in diesem Siebkorbbereich trennt, wobei nur ein Anschluß für eine einzige Gutstoffleitung vorgesehen ist und die Einlaßöffnung (12) im wesentlichen gänzlich im dem Siebkorb zugeordneten Axialbereich des Gehäuses oder Gehäuseteils angeordnet ist.

2. Drucksortierer nach Anspruch 1, dadurch gekennzeichnet, daß dieser zwei Gehäuse umfaßt.

3. Drucksortierer nach Anspruch 2, dadurch gekennzeichnet, daß im Schnitt quer zur Mittelachse der bei Tandemanordnung sich entsprechenden Gehäuseteile (4', 4'') der Ausströmkanal (15) für Gutstoff und die Ausströmkanäle (36, 37) für den Durchlauf spiegelsymmetrisch angeordnet sind.

## Claims

1. Pressure sorter
- with a housing (4', 4") which is cylindrical and circular in cross-section or made up of circular sections perpendicular to the central axis thereof;
- the housing (4', 4") comprising at least one of each of the following:
- an inlet opening (12), a fluid outlet opening (36,37) and a product outlet opening (15), whereby a certain drop in pressure can be produced between the inlet and outlet openings;
- a rotationally symmetrical sieve basket (2) with a rotor (3) disposed centrally therein;
- a product separation chamber (16) located between the sieve basket and the rotor;
- a product chamber (9, 19) located radially outside the sieve basket (2) between the latter and the housing (4', 4'');
- the central axis (M₂) of the housing (4', 4'') being offset by 6 to 12% of the inner diameter of the sieve basket in the direction of outlet in relation to the central axis of the basket (M₁) along a plane which is perpendicular to the product outlet opening (15) or the narrowest cross section (6) of the product outlet opening (15) or deviates from such a plane by 15% at most and contains the central axis (M₁) of the sieve basket characterised by the following features:
- only a lower housing part (8) is offset correspondingly in the area of the outlet opening (15) out of the housing, whereby one half of the sieve basket (2) is located in this area;
- an upper housing part (7) is disposed centrally in relation to the central axis (M₁) of the sieve basket;
- the upper housing part (7) has a truncated cone-shaped dividing wall (20) tapering away from the lower housing part (8), which separates an inlet zone (17) from the product chamber (19) in the region of the sieve basket, whereby only one connection is provided for a single product pipeline and the inlet opening (12) is disposed completely in the axial region of the housing or in a housing section assigned to the sieve basket.

2. Pressure sorter according to claim 1, characterised in that it comprises two housings.

3. Pressure sorter according to claim 2, characterised in that the product outlet openings (15) and the fluid outlet openings (36, 37) are disposed symmetrically of the central axis of the housing sections (4', 4'') which correspond to one another.

## Revendications

1. Cribleur à pression dans lequel :
- un boîtier (4', 4'') est un cylindre circulaire ou présente une section circulaire dans un plan perpendiculaire à l'axe central médian,
- le boîtier (4', 4'') comprend :
- au moins une entrée (12) de la matière brute, des sorties (36, 37) de passage, une sortie (15) de la matière sélectionnée, une certaine chute de pression pouvant être établie entre l'entrée et les sorties,
- un panier de criblage (2) de révolution, tournant autour d'un rotor interne (3),
- une chambre de criblage (16) entre le rotor et le panier,
- une chambre (9, 19) de réception du produit sélectionné, située radialement entre le panier (2) et le boîtier (4', 4''),
- l'axe central (M₂) du boîtier (4', 4'') se trouve dans un plan perpendiculaire à la section (6) la plus étroite de l'ouverture de sortie (15) du boîtier, ou dans un plan s'en écartant de 15° au plus, ce plan contenant l'axe (M₁) du panier de criblage par rapport auquel l'axe (M₂) est décalé, dans le sens de sortie de l'écoulement, d'une distance comprise entre 6 et 12 % du diamètre interne du panier de criblage.
Ce cribleur présentant les caractéristiques suivantes :
- seule la partie inférieure (8) du boîtier est décalée dans la zone de l'ouverture de sortie (15), où se trouve sensiblement une moitié du panier (2),
- la partie supérieure (7) du boîtier est concentrique, à l'axe central (M₁) du panier (2),
- la partie supérieure (7) du boîtier comporte, partant de la partie inférieure (8) une paroi (20) en tronc de cône dirigée vers le haut, qui sépare la zone d'entrée (17) de la zone de collecte (19), du matériau sélectionné dans cette partie du panier de criblage, un raccordement à une sortie unique du matériau sélectionné étant prévue, tandis que l'ouverture d'entrée (12) est disposée en quasi-totalité dans la zone axiale du boîtier ou de la partie de boîtier correspondant au panier de criblage.

2. Cribleur à pression selon la revendication 1, caractérisé en ce qu'il comporte deux boîtiers.

3. Cribleur à pression selon la revendication 2, caractérisé en ce que dans une coupe transversale, perpendiculaire à l'axe médian des parties de boîtiers (4', 4'') disposées en tandem, le canal de sortie (15) du matériau sélectionné et les canaux de sortie (36, 37) du passant, sont symétriques.
